# EUROPÄISCHE PATENTSCHRIFT

(11) **EP 0 803 142 B1**
(45) Veröffentlichungstag und Bekanntmachung des Hinweises auf die Patenterteilung: **16.12.1998**
(21) Anmeldenummer: 96900523.0
(22) Anmeldetag: 09.01.1996
(51) Int. Cl.: H02B 13/035

(54) **WANDLERANORDNUNG AM FELDANSCHLUSS VON GEKAPSELTEN MITTELSPANNUNGS-SCHALTANLAGEN**
TRANSFORMER ASSEMBLY FOR THE FIELD TERMINAL OF ENCAPSULATED MEDIUM-VOLTAGE SWITCHGEAR
ENSEMBLES TRANSFORMATEURS POUR CONNECTEURS DE CHAMP D'INSTALLATIONS DE COMMUTATION ENCAPSULEES A TENSION MOYENNE

(30) Priorität: 13.01.1995 DE 19502061
(43) Veröffentlichungstag der Anmeldung: 29.10.1997
(73) Patentinhaber: SIEMENS AKTIENGESELLSCHAFT, 80333 München (DE)
(72) Erfinder: MÜLLER, Hans-Joachim, D-61191 Rosbach (DE); POTH, Rainer, D-61118 Bad Vilbel (DE)
(86) Internationale Anmeldenummer: DE9600066
(87) Internationale Veröffentlichungsnummer: WO9621962

(56) Entgegenhaltungen:
- EP-A- 0 291 762
- DE-A- 3 313 192
- US-A- 3 767 976
- SIEMENS POWER ENGINEERING, Bd. 3, 1981, Seiten 37-42, XP002010629 WILKE LÜBBEN ET AL.: "SF6-Insulated Switchpanels Incorporating BAF Vacuum Circuit-Breakers"

## Beschreibung

Die Erfindung betrifft eine Wandleranordnung am Feldanschluß von gekapselten Mittelspannungs-Schaltanlagen mit einem Leistungsschaltergehäuse, das durch einen Flansch über eine Durchführung mit einem Sammelschienengehäuse und durch eine Polträgerplatte über eine weitere Durchführung mit einem Kabelanschlußgehäuse verbunden ist.

Die EP-A-0 291 762 offenbart eine derartige Wandleranordnung.

Eine Mittelspannungs-Schaltanlage mit einer Wandleranordnung am Feldanschluß ist aus der Siemens-Firmendruckschrift "Mittelspannungsanlagen", Katalog HA35.11, 1993, Seite 25 bekannt. Der Ringkernwandler ist dort außerhalb des gasgefüllten Kabelanschlußgehäuses angeordnet und bildet in bekannter Weise die Sekundärwicklung. Die Primärwicklung des Wandlers wird hingegen durch die Stromschiene selbst realisiert.

Die Abmessungen des Wandlers werden wesentlich vom benötigten Raumbedarf der Kabelstecker im Kabelanschlußgehäuse mitbestimmt.

Die der Erfindung zugrundeliegende Aufgabe besteht darin, die Wandleranordnung am Feldanschluß zu optimieren und insbesondere so zu gestalten, daß die Konstruktion der Wandler vorrangig durch die elektrisch bedingten Einflußgrößen bestimmt sind, ohne jedoch Einschränkungen hinsichtlich elektrischer Meßwertbereiche und Leistungen hinnehmen zu müssen. Erfindungsgemäß wird dies durch die Merkmale
- 1.1.: das Kabelanschlußgehäuse ist gasdicht abgeschlossen und durch ein oberes Gehäuseteil und durch ein unteres Gehäuseteil gebildet,
- 1.2.: das obere Gehäuseteil ist mit dem unteren Gehäuseteil mittels einer über die Kontur des oberen Gehäuseteils hinausragenden ersten Trägerplatte gasdicht verbunden, wobei die erste Trägerplatte einen Durchgangsbereich für Stromschienen aufweist,
- 1.3.: die Kontur des oberen Gehäuseteils ist gegenüber der Kontur des unteren Gehäuseteils im Querschnitt maßreduziert,
- 1.4.: die erste Trägerplatte dient der Aufnahme mindestens eines Ringkernwandlers, erreicht.

Mit der Aufteilung des Kabelanschlußgehäuses in einen oberen und einem unteren Gehäuseteil und der Reduzierung des Querschnitts des oberen Gehäuseteils gegenüber dem unteren Gehäuseteils wird mit der über die Kontur des oberen Gehäuseteils hinausragenden ersten Trageplatte praktisch eine Plattform zur Aufnahme mindestens eines Ringkerns geschaffen. Durch den im Querschnitt maßreduzierten oberen Gehäuseteil ist erreicht, daß die Ringkerndurchmesser gegenüber den bekannten Abmaßen wesentlich geringer gehalten werden können, so daß bereits durch die entsprechend bedingte Materialreduzierung erhebliche Kosten eingespart werden konnen. Je nach Bedarf können auf dieser ersten Trägerplatte auch zusätzliche Ringkernwandler untergebracht sein.

Eine vorteilhafte Ausgestaltung der Erfindung sieht die Merkmale
- 2.1.: der untere Gehäuseteil ist durch eine zweite Trägerplatte gasdicht abgeschlossen, deren Kontur über die Kontur des unteren Gehäuseteils herausragt,
- 2.2.: die zweite Trägerplatte dient der Aufnahme eines von dem Ringkernwandler des oberen Gehäuseteils unabhängigen weiteren Ringkernwandlers, vor.

Damit ist die Möglichkeit geschaffen, im Bedarfsfall von den auf der oberen Trägerplatte angebrachten Ringkernwandler unabhängige weitere Ringkernwandler am Feldanschluß unterzubringen.

Eine weitere vorteilhafte Ausgestaltung der Erfindung sieht die Merkmale
- 3.1.: die Kontur der ersten Trägerplatte und die Kontur der zweiten Trägerplatte sind kreisförmig ausgebildet,
- 3.2.: die Kontur der ersten Tragerplatte und die Kontur der zweiten Trägerplatte sind derart ausgeführt, daß sämtliche Ringkernwandler jeweils mit ihrem entsprechenden Spulengehäuse durch die entsprechende erste und zweite Trägerplatte abgestützt sind, vor.

Mit der kreisförmigen Kontur der ersten und der zweiten Trägerplatte können die entsprechenden Ringkernwandler vollflächig gestützt werden.

Die Erfindung wird durch ein schematisch dargestelltes Ausführungsbeispiel näher erläutert, in dem eine gekapselte Mittelspannungs-Schaltanlage mit seinen wesentlichen Bestandteilen teils schematisch in einem offenen Schnittbild dargestellt ist. Zum besseren Verständnis der Erfindung sind auch Bestandteile der Mittelspannungs-Schaltanlage gezeigt, die lediglich die Einbaulage dieser Bestandteile in der Schaltanlage zeigen, jedoch nicht unmittelbar mit der Wandleranordnung in Verbindung stehen.

Die Mittelspannungs-Schaltanlage enthält im wesentlichen u. a. das Leistungsschaltergehäuse LSG mit den dort untergebrachten Vakuumschaltröhren VSR sowie einem darüber befindlichen Sammelschienengehäuse SSG, in dem die Sammelschienen SSE untergebracht sind. Die Verbindung zwischen den Sammelschienen SSE und den entsprechenden Vakuumschaltröhren VSR wird innerhalb des Sammelschienengehäuses SSG durch den dort angeordneten Dreistellungsschalter DSS bewirkt. Unterhalb des Leistungsschaltergehäuses LSG ist die Polträgerplatte PTP angeordnet, an die sich das Kabelanschlußgehäuse KAG anschließt. Sowohl das Leistungsschaltergehäuse LSG als auch das Kabelanschlußgehäuse KAG sind mit einem Schutzgas gefüllt und dicht verschlossen. Das Kabelanschlußgehäuse KAG ist unterteilt in ein oberes Gehäuseteil GTO und ein unteres Gehäuseteil GTU. Die nicht bezeichneten im unteren Gehäuseteil GTU befindlichen Kabelanschlüsse werden mit den Vakuumschaltröhren VSR über eine entsprechende Stromschiene STS verbunden, die sowohl durch den oberen Gehäuseteil GTO als auch durch den unteren Gehäuseteil GTU geführt ist. Weiterhin ist ersichtlich, daß der obere Gehäuseteil GTO des Kabelanschlußgehäuses KAG durch die erste Trägerplatte TP1 abgeschlossen ist, die gleichzeitig zur Durchführung der Stromschiene STS den Durchgangsbereich DGB aufweist. Der obere Gehäuseteil GTO ist im Querschnitt gegenüber dem unteren Gehäuseteil GTU maßreduziert, so daß sich mit der die Querschnittskontur des oberen Gehäuseteils GTO überragenden ersten Trageplatte TP1 für die dort untergebrachten Ringkernwandler RKW mit ihren Spulengehäusen SPG eine optimale Lageunterstützung ergibt. Weiterhin ist ersichtlich, daß der untere Gehäuseteil GTU des Kabelanschlußgehäsues KAG mit der zweiten Trageplatte TP2 gasdicht abgeschlossen ist, wobei die zweite Trageplatte TP2 in gleicher Weise über die Kontur des unteren Gehäuseteils GTU herausragt und dem Spulengehäuse SPG des dort angebrachten Ringkernwandlers RKW' als Stützlagerung dient. Das Kabelanschlußgehäuse KAG ist gänzlich innerhalb des Gestells GST untergebracht, so daß sämtliche Spulengehäuse SPG der Ringkernwandler RKW, RKW' im Bereich des Feldanschlussses FAS von außen zugänglich sind.

Mit dieser Wanderanordnung unterhalb der Polträgerplatte PTP ist auch der nachträgliche Einbau oder der Austausch von Ringkernwandlern ohne vorherigen Ausbau der Vakuumschaltröhren VSR möglich. Der Einbau der Ringkernwandler RKW, RKW' kann somit am Ende einer Montagekette zum Aufbau der Mittelspannungs-Schaltanlagen erfolgen.

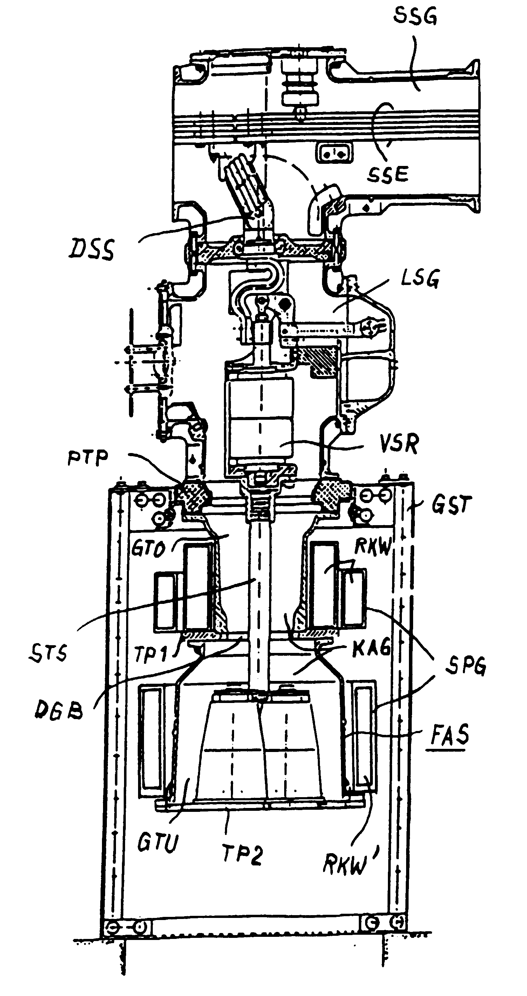

## Patentansprüche

1. Wandleranordnung am Feldanschluß von gekapselten Mittelspannungs-Schaltanlagen mit einem Leistungsschaltergehäuse (LSG), das durch einen Flansch über eine Durchführung mit einem Sammelschienengehäuse SSG und durch eine Polträgerplatte (PTP) über eine weitere Durchführung mit einem Kabelanschlußgehäuse (KAG) verbunden ist,
**gekennzeichnet durch** die Merkmale
1.1. das Kabelanschlußgehäuse (KAG) ist gasdicht abgeschlossen und durch ein oberes Gehäuseteil (GTO) und durch ein unteres Gehäuseteil (GTU) gebildet,
1.2. das obere Gehäuseteil (GTO) ist mit dem unteren Gehäuseteil (GTU) mittels einer über die Kontur des oberen Gehäuseteils (GTO) hinausragenden ersten Trägerplatte (TP1) gasdicht verbunden, wobei die erste Trägerplatte (TP1) einen Durchgangsbereich (DGB) für Stromschienen (STS) aufweist,
1.3. die Kontur des oberen Gehäuseteils (GTO) ist gegenüber der Kontur des unteren Gehäuseteils (GTU) im Querschnitt maßreduziert,
1.4. die erste Trägerplatte (TP1) dient der Aufnahme mindestens eines Ringkernwandlers (RKW).

2. Wandleranordnung am Feldanschluß nach Anspruch 1,
**gekennzeichnet durch** die Merkmale
2.1. der untere Gehäuseteil (GTU) ist durch eine zweite Trägerplatte (TP2) gasdicht abgeschlossen, deren Kontur über die Kontur des unteren Gehäuseteils (GTU) herausragt,
2.2. die zweite Trägerplatte (TP2) dient der Aufnahme eines von dem Ringkernwandler (RKW) des oberen Gehäuseteils (GTO) unabhängigen weiteren Ringkernwandlers (RKW').

3. Wandleranordnung am Feldanschluß nach den Ansprüchen 1 und 2,
**gekennzeichnet durch** die Merkmale
3.1. die Kontur der ersten Trägerplatte (TP1) und die Kontur der zweiten Trägerplatte (TP2) sind kreisförmig ausgebildet,
3.2. die Kontur der ersten Trägerplatte (TP1) und die Kontur der zweiten Trägerplatte (TP2) sind derart ausgeführt, daß sämtliche Ringkernwandler (RKW, RKW') jeweils mit ihrem entsprechenden Spulengehäuse (SPG) durch die entsprechende erste und zweite Trägerplatte (TP1, TP2) abgestützt sind.

## Claims

1. Transformer arrangement for the field terminal of encapsulated medium-voltage switchgear having a circuit-breaker housing (LSG) which is connected to a busbar housing (SSG) by means of a flange by way of a bushing and to a cable-terminal housing (KAG) by means of a pole carrier plate (PTP) by way of a further bushing,
characterised by the features:
1.1. the cable-terminal housing (KAG) is sealed Off in a gas-tight manner and is formed by an upper housing portion (GTO) and by means of a lower housing portion (GTU),
1.2. the upper housing portion (GTO) is connected in a gas-tight manner to the lower housing portion (GTU) by means of a first carrier plate (TP1) which projects out beyond the contour of the upper housing portion (GTO), with the first carrier plate (TP1) having a through-region (DGB) for conductor bars (STS),
1.3. the cross-sectional contour of the upper housing portion (GTO) is reduced in size in comparison with the contour of the lower housing portion (GTU),
1.4. the first carrier plate (TP1) is used to receive at least one toroidal-core transformer (RKW).

2. Transformer arrangement for the field terminal according to claim 1, characterised by the features:
2.1. the lower housing portion (GTU) is sealed off in a gas-tight manner by means of a second carrier plate (TP2), the contour of which projects out beyond the contour of the lower housing portion (GTU),
2.2. the second carrier plate (TP2) is used to receive a further toroidal-core transformer (RKW') which is independent of the toroidal-core transformer (RKW) of the upper housing portion (GTO).

3. Transformer arrangement for the field terminal according to claims 1 and 2, characterised by the features:
3.1. the contour of the first carrier plate (TP1) and the contour of the second carrier plate (TP2) are of a circular form,
3.2. the contour of the first carrier plate (TP1) and the contour of the second carrier plate (TP2) are realized in such a way that all the toroidal-core transformers (RKW, RKW') are, in each case, supported by their corresponding coil housing (SPG) by means of the corresponding first and second carrier plate (TP1, TP2).

## Revendications

1. Dispositif transformateur sur le raccordement de panneau d'installations de coupure encapsulées à tension moyenne, comportant un boîtier (LSG) de disjoncteur qui est relié par une bride, par l'intermédiaire d'une traversée, à un boîtier (SSG) de rails collecteurs et par une plaque (PTP) de support de pôle, par l'intermédiaire d'une traversée supplémentaire, à un boîtier (KAG) de raccordement de câble,
caractérisé en ce que
1.1. le boîtier (KAG) de raccordement de câble est fermé de manière étanche au gaz et est formé par une pièce (GTO) de boîtier supérieure et une pièce (GTU) de boîtier inférieure,
1.2. la pièce (GTO) de boîtier supérieure est reliée à la pièce (GTU) de boîtier inférieure au moyen d'une première plaque (TP1) de support faisant saillie au-delà du contour de la pièce (GTO) de boîtier supérieure, la première plaque (TP1) de support comportant une zone (DGB) de passage pour des rails (STS) conducteurs,
1.3. le contour de la pièce (GTO) de boîtier supérieure est, en section transversale, de dimensions réduites par rapport au contour de la pièce (GTU) de boîtier inférieure,
1.4. la première plaque (TP1) de support sert à la réception d'au moins un transformateur (RKW) à noyau annulaire.

2. Dispositif transformateur sur le raccordement de panneau suivant la revendication 1, caractérisé en ce que
2.1. la pièce (GTU) de boîtier inférieure est fermée de manière étanche au gaz par une deuxième plaque (TP2) de support dont le contour fait saillie du contour de la pièce (GTU) de boîtier inférieure,
2.2. la deuxième plaque (TP2) de support sert à la réception d'un transformateur (RKW') à noyau annulaire supplémentaire, indépendant du transformateur (RKW) à noyau annulaire de la pièce (GTO) de boîtier supérieure.

3. Dispositif transformateur sur le raccordement de panneau suivant les revendications 1 et 2, caractérisé en ce que
3.1. le contour de la première plaque (TP1) de support et le contour de la deuxième plaque (TP2) de support sont réalisés de manière circulaire,
3.2. le contour de la première plaque (TP1) de support et le contour de la deuxième plaque (TP2) de support sont réalisés de telle manière que tous les transformateurs (RKW, RKW') à noyau annulaire sont soutenus, chacun par leur boîtier (SPG) de bobine correspondant, par la première plaque (TP1) de support et la deuxième plaque (TP2) de support correspondantes.
